# EUROPEAN PATENT APPLICATION

(11) **EP 1 020 110 A2**
(43) Date of publication of application: **19.07.2000**
(21) Application number: 00200088.3
(22) Date of filing: 13.01.2000
(51) Int. Cl.: A01G 23/04

(54) **Device for packing rootballs into packing wire gauze**

(30) Priority: 14.01.1999 NL 1011030
(71) Applicant: Konijn, Jan Leendert, 6744 PZ Ederveen (NL)
(72) Inventor: Konijn, Jan Leendert, 6744 PZ Ederveen (NL)
(74) Representative: Lips, Hendrik Jan George, Ir.

(57) **Abstract**

Device for packing rootballs (24) of small trees (23), bushes and similar rootballs into packing wire gauze (25), said device being provided with a packing wire gauze supply, or being intended for use in combination with a packing wire gauze (25) feeding device, and in which the device is further provided with a gripping member (15) for grasping the small trees (23), an arc-shaped first guide (2) for moving the gripping member to and fro in a curve, a second guide (4) or second guides being approximately perpendicular to the first guide, for moving said gripping member (15) up and down.

## Description

The invention relates to a device for packing rootballs of small trees, bushes and similar rootballs into packing wire gauze, said device being provided with a packing wire gauze supply or being intended to be used in combination with a packing wire gauze feeding device.

Packing rootballs of bushes and small trees, such as conifers, into gauze, is generally known and is intended to keep the roots within the rootball as best one can, for the purpose of protection. Up to now, packing is largely manual work, with only the supply of the gauze being mechanized.

The gauze employed is a relatively expensive elastic gauze, which is supplied in elongate, tunnel-shaped webs on rolls, or in a rolled-up condition. This gauze is intended to be used with a feeding device, in which the tunnel-shaped web is moved upward along the outside of a cup-shaped part, to beyond the edge of the cup-shaped part. Due to the elasticity of the gauze, it can stretch across the major part of the open top side of the cup-shaped part, and may possibly hang down slightly into the cup-shaped part, in the centre of the cup-shaped part. The cup-shaped part is mounted in an opening of a usually movable worktable in such a way, that the top side of the cup-shaped part is approximately at the height of the top of said worktable.

In practice, the successive actions are: picking up a small tree or bush near its rootball with one hand, subsequently pushing it into the cup-shaped part with the rootball, in which at the same time the driving mechanism of the supply of the elastic gauze is to be actuated by a pedal, then rotating the rootball and pulling it from the cup-shaped part followed by cutting away the gauze at the bottom side of the rootball with a knife.

Obviously, such manual work involves a number of disadvantages, starting with the adverse physical effects for the person carrying out the job of packing. The adverse physical effects result from an unnatural, bent and crooked posture, combined with the number of rootballs to be packed in succession, which may amount to 3000 per person per day.

Further disadvantages are that the quality of the rootballs is not checked sufficiently on account of the fatiguing work, and that the gauze is not cut away immediately below the rootball. The loss of gauze caused in this way may represent a clear difference in the selling price actually to be charged per bush or per small tree.

The object of the invention is to eliminate said disadvantages and to provide for a device which enables working quickly, in which proper packing of the rootball is assured, and in which the costs are clearly lower than with the usual manual work.

Accordingly, the invention provides for, that the device has a frame, a gripping member movable in at least two directions, by which a tree or bush can be grasped, and a cutting member for cutting-off the packing gauze, and further driving means for driving the gripping member and the cutting member have been provided for, as well as control means for controlling the driving means.

Movement of the gripping member takes place along guides, to which end at least guides for moving the gripping member up and down in approximately vertical direction have been mounted on the frame. According to further elaboration it is additionally provided for, that guides for enabling the gripping member to move along an arc-shaped or circular arc-shaped path have been mounted on the frame, the point of engagement of said gripping member being near or approximately in the centre of said path.

After placing a bush or small tree in the gripping member, the device can be driven such that the rootball is brought in and out of the cup-shaped part in the desired, predetermined way, and that the elastic gauze is cut-off at the proper height. The predetermined way may consist of only a vertical movement up and down, or a combined movement which additionally involves a rotation to and fro. With said latter movement, the elastic gauze at the top side of the rootball will always connect well to the trunk of bush or small tree.

The obvious advantages reside in the fact that the movements carried out by the device are always the desired movements, which are always carried out at the same velocity, which is a velocity that can be much higher than the one achievable with the usual manual work, and that further the elastic gauze is always cut-off without any waste.

According to a first embodiment, it is provided for that a first, at least partly arc-shaped or circular arc-shaped guide for a first carriage is mounted, that a second guide for a second carriage is mounted on said first guide, the second guide being approximately perpendicular to the plane in which the first guide is located, and the gripping member being mounted on said second carriage.

A driving member, which can comprise a pneumatic or hydraulic cylinder, or a combination of a pivoting arm and a cylinder acting on it, and is intended for moving the gripping member up and down in vertical direction, is mounted between first and second carriage. A similar drive can be provided for moving the second carriage along the arc-shaped guide. The gripping member will preferably comprise a fixed arm and a movable arm, in which the movable arm can be an arm rotatable across an angle or an arm slideable across a predetermined distance. Preferably, driving takes place with the help of a cylinder as well.

This first embodiment provides for a compact device that can be accommodated in a relatively small housing.

According to a second embodiment, it is provided for, that a first arc-shaped or circular arc-shaped guide is mounted on a guide, said supporting member being movable in vertical direction between at least two guides, and said gripping member engaging the arc-shaped or circular arc-shaped guide through a first carriage. In relation to the first embodiment, said second embodiment has the advantage of an easily obtainable greater stability. At the same time, the guides are at a greater distance from the rootball, as a consequence of which they can be more easily protected against earth and sand.

In this embodiment, the drive corresponds to the drive in the first embodiment, be it that for vertical movement, the drive engages near each vertical guide.

In order to enable quick movement, the carriages moveable along the guides are provided with rollers. It is preferred to have the carriages with at least two rollers engage at least two sides of the guides, since, also given the weight of the bush or small tree with rootball, relatively large forces may be exerted on said carriages and guides. A simple embodiment thereof is e.g. two rollers having a hollow running surface at each side of a guide, in which the guide falls in the hollow parts of the rollers.

Although it is possible to design the cutting member as as simple knife, it is preferred to use a driven knife to this end, which can cut the gauze more reliably and in which it is just as important that this can be done at a high velocity. Further, here it is provided for, that the cutting member is connected to the frame through a pivoting or extension arm, in such a way, that the cutting member can perform a movement in a plane which is approximately parallel to the at least partly arc-shaped first guide. By a pivoting arm which is actuated with the help of e.g. a hydraulically or pneumatically driven cylinder/piston assembly, the cutting member can be moved through the gauze very rapidly.

According to a further elaboration, one preferably applies a disc-shaped cutting member which can initially be employed as supporting and reference surface on bringing a small tree into the gripping member. The advantage is that through this, it is impossible that the rootballs can be placed in the device at different levels and that as a result of that the elastic gauze will not be correctly applied around the rootball and/or may be cut wrongly.

Further, an operating system is provided, which comprises a number of signalling members, and which is arranged in such a way, that on a first signal originating from a first signalling means coupled to the gripping member, said gripping member is closed and is moved from the first, upper position into a second, lower position, is rotated across a predetermined angle, is moved up again into said first position; that on reaching the first position again, a second signalling means produces a second signal and the cutting member is driven, and on a third signal, originating from a signalling means controlled by the cutting member on reaching a maximum position, opens the gripping member.

The first signalling means is connected to detecting means mounted near the gripping member, said detecting means detecting a bush or small tree coming within the gripping area of said gripping member.

After cutting through the elastic gauze and producing the third signal, before the gripping member is opened, along the first guide the first carriage can be returned to the position it took up before packing. It is also possible to arrange the control in such a way, that successive packing cycles from engaging to again releasing the bush or small tree always occurs in an opposite direction along the first guide.

Further, during movement of the second carriage(s) along the second guide(s), either during downward movement or during upward movement, it is also possible to have a rotation across an angle opposed to the predetermined angle take place, so that the device will return to the starting position after each cycle.

Preferably, this takes place during upward movement of the second carriage, in which first the carriage is moved upward across a distance without rotation, and that the rotation is started only after said distance. Due to this movement, the gauze will remain connecting properly to the top side of the rootball, and the gauze will fit tightly around the rootball, from a certain height to the bottom of the rootball. This has the further advantage, that the tunnel-shaped gauze will be somewhat twisted immediately below the rootball, as a result of which cutting the gauze can be done more quickly and reliably.

According to another elaboration it is provided for, that on a first signal originating from a first signalling means coupled to the detecting means, the gripping member will be closed and will be brought from the first, upper position to an intermediate position between the first and second positions, and that from the intermediate position the control can continued by an operating signal to be produced by an operator. The intermediate position is adjusted in such a way, that a rootball will come to lie correctly on the gauze stretched across the opening of the cup-shaped part. Said intermediate position is of importance for filling up the rootball, if necessary, since not every rootball is equally firm and it is possible that during bringing bush or small tree into the device, a part of the rootball might drop off and may expose a part of the roots.

According to a further elaboration, it can be provided for, that when the first carriage and/or the second carriage reach(es) the first position again, the second signal for controlling the cutting member is an operating signal to be produced by the operator. Through this it is achieved that the operator has one hand at the operating knob and keeps the other hand near the bush or small tree in order to be able to catch it when the gripping member releases it, since the time between producing the second signal and opening of the gripping member is very short. This prevents the operator from being able to get dangerously close to the cutting member with one or two hands.

Finally, it is provided for, that when the first carriage and/or the second carriage reach(es) the first position again, or by producing the second signal for controlling the cutting member, a signal is supplied to a counting member. Through this, on can easily check if a predetermined amount of bushes/small trees has been placed on a pallet, and how many have been processed in a day or per employee.

Hereinafter, the invention is further explained by way of the example given in the drawing, in which:
Figs. 1, 1A show schematically a plan view and a side view, respectively, of a first embodiment in a first position;
Figs. 2, 2A show schematically a plan view and a side view, respectively, of the first embodiment in a second position;
Figs. 3, 3A show schematically a plan view and a side view, respectively, of the first embodiment in a third position;
Figs. 4, 4A show schematically a plan view and a side view, respectively, of the first embodiment in a fourth position;
Figs. 5, 5A, 5B show schematically a front, plan and side view of a second embodiment; and
Fig. 6 schematically shows a plan view of the second embodiment in more detail.

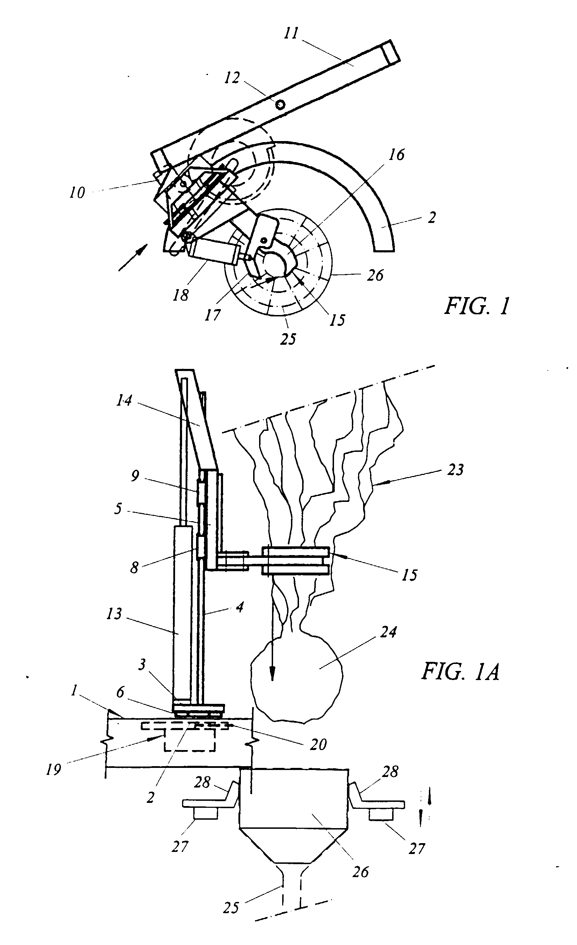

Fig. 1 shows schematically a first embodiment of the device having a frame 1, a first guide 2, a carriage 3 movable along it, a second guide 4 mounted perpendicular to said first carriage 3 and a second carriage 5 movable along said second guide 4. The carriages 3, 5 each have pairs of rollers 6, 7, 8, 9 engaging opposite sides of the respective guides 2, 4, the rollers having concave running surfaces exactly connecting to the convex sides of the guides 2, 4.

Through a connecting piece 10, the first carriage 3 is connected to the piston of a piston rod-less cylinder 11. The hydraulic or pneumatic cylinder 11 has a pivot point 12 on the frame 1. On movement of the piston within the cylinder 11, the first carriage 3 is taken along the guide 2, with the cylinder at the same time performing a rotation around the pivot point 12. In this way, the carriage 3 can be moved to and fro along the guide 2. An alternative structure has a bending arm consisting of two parts, with a cylinder engaging one of said arms.

A hydraulic or pneumatic cylinder 13 connected to the second carriage 5 through a connecting piece 14 is mounted on the first carriage 3. The second carriage mounts a gripping member 15 having a fixed arm 16 and a movable arm 17, which member can be opened and closed by the cylinder 18 also mounted on the second carriage 5. A sensor (not illustrated in the figure) is mounted near the gripping member, the sensor being able to detect a bush or small tree brought within the range of said gripping member 15, and whereupon the cylinder 18 can be driven by a control system not further indicated in the drawing.

A cutting member 19 having a cutting disc 20, preferably a driven cutting member, is arranged below the first guide. The cutting member is connected to the frame through a pivoting arm 21 and can be moved up and down by a preferably pneumatic cylinder 22, in which the cutting member is moved to and fro immediately below a rootball 24 of a small tree 23 and the gauze 25 supplied in a tunnel-shaped web is cut.

A cup-shaped part 26, along which the tunnel-shaped web of elastic gauze 25 can be led upward, is located below the frame 1. To this end, engaging members 28 are mounted across the circumference of the cup-shaped part on a ring 27 movable up and down, in which said engaging members take along the gauze in their upward movement and slide across the gauze 25 in their downward movement. In this way, the gauze 25 is gradually led up along the cup-shaped part and over its edge.

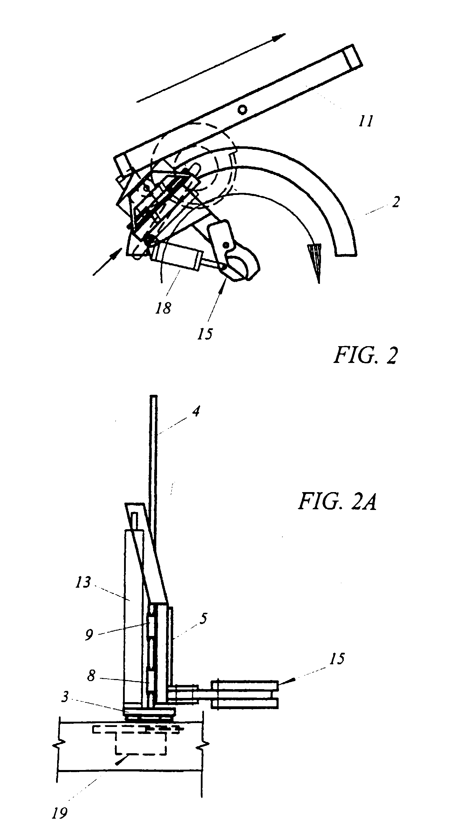

In order to avoid making the other figures unnecessarily complicated, only the various positions of the carriages and the gripping member have been indicated therein. In Figs. 1, 1A the device is illustrated in the starting position, with the first carriage 3 being located at the left end of the first guide, the second guide 5 being in the highest position and the gripping member 15 being opened. After a small tree has been brought into the opening of the gripping member 15 and has been detected, said gripping member 15 closes, see Fig. 2.

Fig. 2A shows the position in which the second carriage 5 has been brought to the lowermost point along the guide 4. In practice, one will often incorporate an intermediate position, in which the rootball 24 will come to bear just on the gauze 25 over the top of the cup-shaped part 26, so that the rootball 24, if necessary, can still be filled up with earth. During downward movement of the rootball 24 in the cup-shaped part, a sufficient supply of the gauze 25 is provided, so that the gauze 25 will enclose the rootball 24 completely.

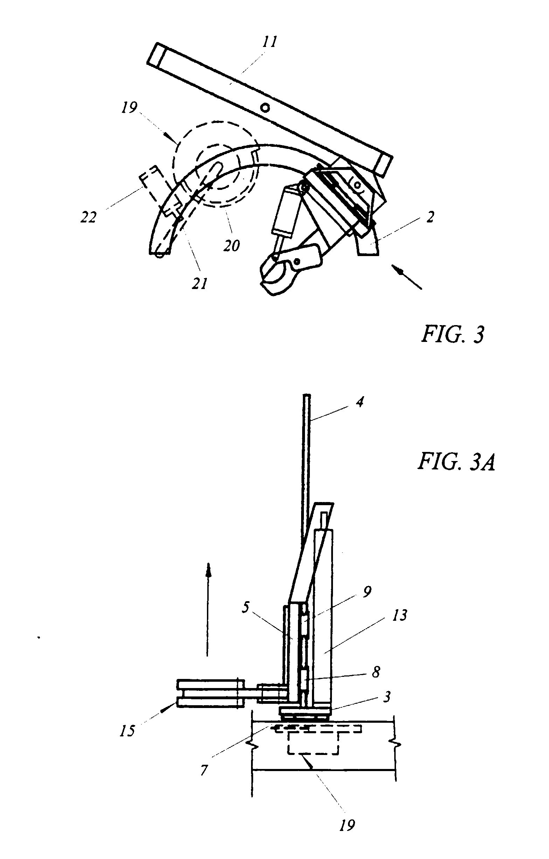

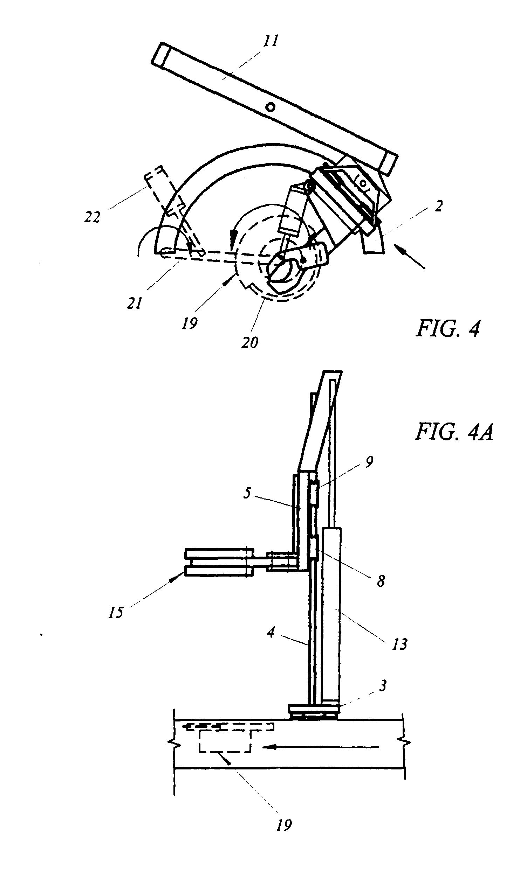

Then, carriage 3 is moved along the guide 2 to the other end thereof (Figs. 2, 3), the rootball 24 still being located at the bottom of the cup-shaped part. At the top, the gauze 25 will come to lie on said rootball 24 in a properly closing state, and near or against the trunk of the small tree 23. After that, the carriage 5 is moved up again along the guide 4 (Figs. 3A, 4A) and the cutting member 19 cuts the gauze 25 immediately below the rootball 24.

A signalling means (not illustrated) can be mounted at the end of the pivoting movement of the cutting member 19, said signalling means providing for, that the carriage 3 is returned to the starting point of Figs. 1, 1A and the gripping member will be opened again when that position is reached. It is also possible that after, or at least partly simultaneously with, moving second carriage 5 upward, first carriage 3 is returned to the starting point, and that only then the gauze 25 will be cut with cutting member 19.

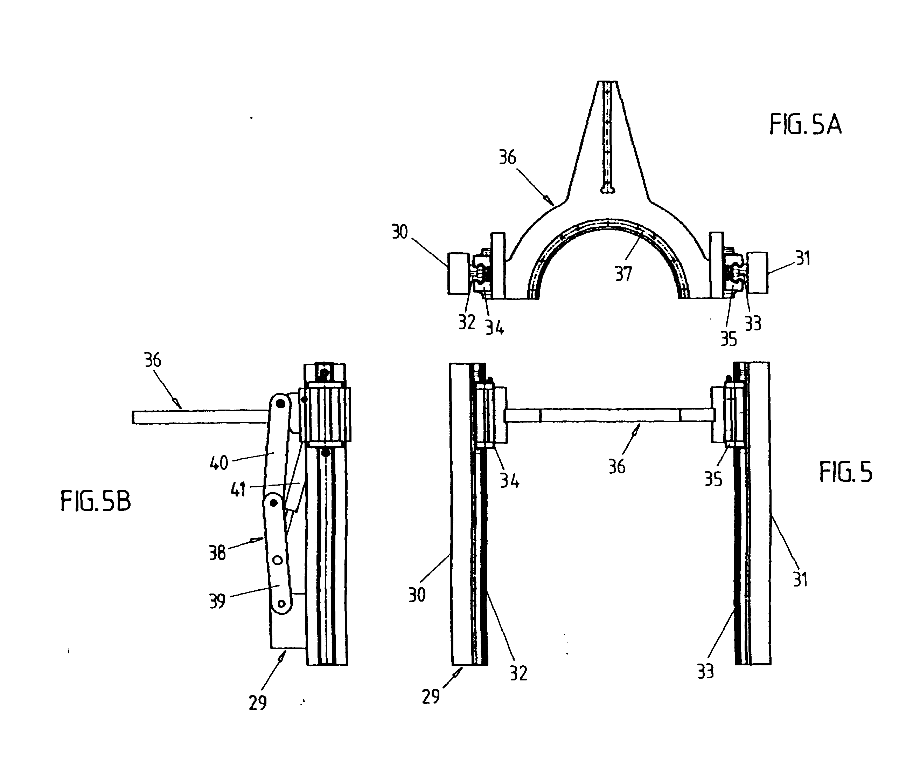

Fig. 5 presents a front view of a second embodiment of the device, in which two posts 30, 31 are mounted on a frame 29 having vertical guides 32, 33 along them. A supporting member 36 engaging said guides 32, 33 through carriages 33, 34 is mounted between 32, 33. The supporting member 36 mounts an arc-shaped guide 37 (see Fig. 5A) intended to be engaged by a gripping member of a further carriage.

In the side view according to Fig. 5B, it can be seen that a drive for the upward and downward movement of said supporting member is mounted near a guide 31 between the frame 29 and the supporting member 34. The drive substantially comprises a driving arm 38 consisting of two parts 39, 40 pivotable in relation to one another and to the frame and the supporting member, which are engaged by a hydraulic or pneumatic cylinder 41. Preferably, driving arms 38 which can both be driven by a common cylinder or can be driven individually with separate cylinders, are mounted near both guides 32, 33.

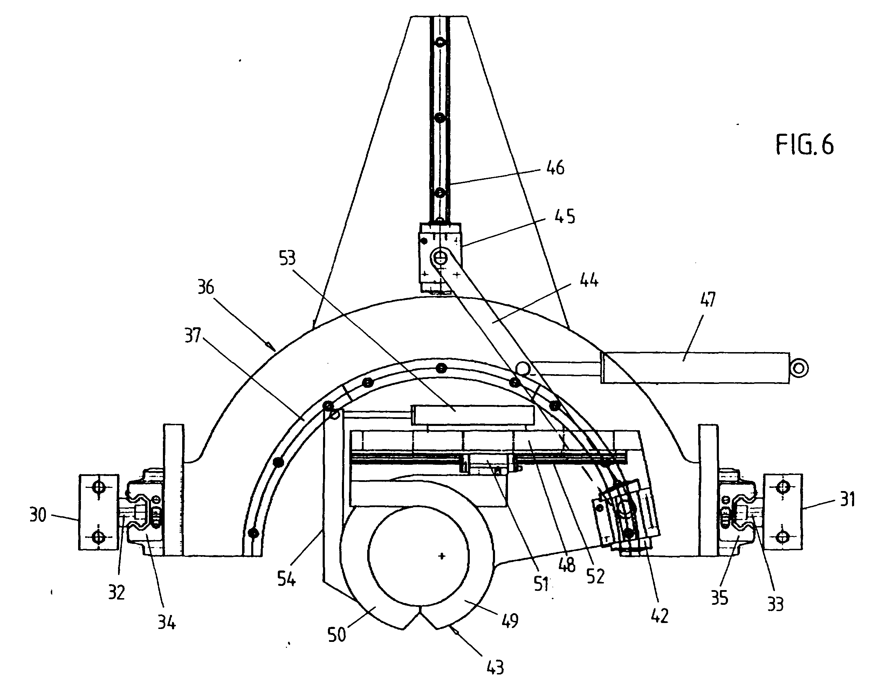

The plan view according to Fig. 6 shows the supporting member 36 having the arc-shaped guide 37 in more detail. A carriage 42 with a gripping member 43 secured thereon is mounted on the guide 37. For moving the carriage 42 and gripping member 43 along the guide 37, a driving arm 44 is provided, having its end connected to the carriage 42 and having its opposite end connected to a carriage 45 on a further guide 46 extending radially in relation to the arc-shaped guide 37. A cylinder 47 at one side connected to the frame in a way not further indicated engages the driving arm 44, the cylinder stroke being long enough to move the carriage 42 having the gripping member 43 from one end of the guide 37 to the other end and back, in case of simultaneous movement of the carriages 42, 45 along the respective guides 37, 46.

Position detecting means not further illustrated in the drawing are provided for detecting the arrival of carriage 42 at the ends of the guide and the reversal of the movement or halt thereof. Said means can be arranged to immediately determine the position of carriage 42, but it is also possible to do this by determining the position of the carriage 45 in relation to the guide 46.

The gripping member 43 has a first arm 48 fixedly connected to carriage 42 and a second arm 50 movable in relation to it. Through a carriage 51, said second arm 50 engages guide 52 mounted on the connecting piece 48. For moving the second arm 50 of the gripping member along said guide 52, a hydraulic or pneumatic cylinder 53 is provided, which is mounted on said connecting piece 48 and engages said second arm 50 through transfer arm 54.

## Claims

1. Device for packing rootballs of small trees, bushes and similar rootballs into packing wire gauze, said device being provided with a packing wire gauze supply, or being intended to be used in combination with a packing wire gauze feeding device, characterized in that the device has a frame, a gripping member movable in at least two directions, by which a tree or bush can be grasped, and a cutting member for cutting-off the packing gauze, and further driving means for driving the gripping member and the cutting member have been provided for, as well as control means for controlling the driving means.

2. Device according to claim 1, characterized in that guides for moving the gripping member up and down in approximately vertical direction have been mounted on the frame.

3. Device according to claim 2, characterized in that guides for enabling the gripping member to move along an arc-shaped or circular arc-shaped path have been mounted on the frame, the point of engagement of said gripping member being near or approximately in the centre of said path.

4. Device according to claims 2 - 3, characterized in that a first, at least partly arc-shaped or circular arc-shaped guide for a first carriage is mounted, that a second guide for a second carriage is mounted on said first guide, the second guide being approximately perpendicular to the plane in which the first guide is located, said gripping member being mounted on said second carriage.

5. Device according to claims 2 - 4, characterized in that the gripping member has a first arm fixedly connected to the second carriage and a second arm rotatably connected to said first arm, a driving member being mounted between the second arm and the second carriage.

6. Device according to claims 2 - 5, characterized in that a driving member coupled to the second carriage, for moving the gripping member between an upper and a lower position, is mounted on the first carriage.

7. Device according to claims 2 - 6, characterized in that a driving member is provided, which is pivotably connected to the frame and the first carriage, by which member the first carriage can be moved to and fro along the at least partially arc-shaped first guide.

8. Device according to claim 2 - 3, characterized in that a first arc-shaped or circular arc-shaped guide is mounted on a supporting member, the supporting member being movable between at least two guides in vertical direction, and the gripping member engaging said arc-shaped or circular arc-shaped guide by means of a first carriage.

9. Device according to claim 8, characterized in that radially in relation to said arc-shaped or circular arc-shaped first guide, a further third guide having a third carriage is mounted, the first and third carriages being connected by a connecting arm and in which further means engaging said connecting arm have been provided.

10. Device according to claims 8 - 9, characterized in that at least one driving member or a pivoting arm comprised of parts, is mounted between the frame and the supporting member, the driving member engaging one of the parts of said pivoting arm.

11. Device according to claims 2 - 10, characterized in that at least one of the carriages engage at least two of the sides of the guides through at least two rollers.

12. Device according to claims 2 - 11, characterized in that the cutting member is mounted at a predetermined distance from the highest position the gripping member can take up, and that the cutting member is connected to the frame through a pivoting or extension arm, in such a way that the cutting member can perform a movement in a plane approximately parallel to the plane of the at least partly arc-shaped first guide.

13. Device according to claims 2 - 12, characterized in that detecting means for detecting an object placed in an opened gripping member have been mounted near the gripping member.

14. Device according to claims 1 - 13, characterized in that the device is provided with at least one counting member, which is driven mechanically or from the control means.

15. Device according to claims 1 - 14, characterized in that a control system having a number of signalling means is provided, said system being arranged such, that on a first signal originating from a first signalling means coupled to the gripping member, said gripping member is closed and is moved from the first, upper position into a second, lower position, is rotated across a predetermined angle, is moved up again into said first position; that on reaching the first position again, a second signalling means produces a second signal and the cutting member is driven, and on a third signal, originating from a signalling means controlled by the cutting member on reaching a maximum position, opens the gripping member.

16. Device according to claims 1 - 14, characterized in that a control system having a number of signalling means is provided, said system being arranged such, that on a first signal originating from a first signalling means coupled to the detecting means, said gripping member is closed and is moved from the first, upper position into a second, lower position, is rotated across a predetermined angle, is moved up again over a predetermined distance, and then at the same time it is rotated back across the predetermined angle and returned to the first, upper position again, and that on reaching the first position again, a second signalling means produces a second signal and the cutting member is driven, and on a third signal, originating from a signalling means controlled by the cutting member on reaching a maximum position, opens the gripping member.
